# DEMANDE DE BREVET EUROPEEN

(11) **EP 1 325 887 A1**
(43) Date de publication de la demande: **09.07.2003**
(21) Numéro de dépôt: 02293153.9
(22) Date de dépôt: 19.12.2002
(51) Int. Cl.: C01B 7/07, C01B 7/19, C01C 1/02

(54) **Procédé de production d'une solution de produit chimique à partir de la phase liquide d'un produit chimique**

(30) Priorité: 21.12.2001 FR 0116634
(71) Demandeur: Air Liquide Electronics Systems, 75007 Paris (FR)
(72) Inventeur: Dulphy, Hervé, 38000 Grenoble (FR); Duchateau, Eric, 38610 Gieres (FR)
(74) Mandataire: Vesin, Jacques

(57) **Abrégé**

Le procédé de production d'une solution ultra pure d'un produit chimique à partir du produit chimique sous forme de gaz liquéfié comprimé de l'invention, est caractérisé en ce qu'on utilise un gaz de qualité industrielle et en ce qu'il comprend a) l'introduction du produit chimique dans un dispositif de distillation où il est fractionné en une fraction lourde contaminée et en une fraction gazeuse purifiée, b) l'introduction de la fraction gazeuse purifiée dans un dispositif d'absorption où elle est mise en contact avec de l'eau désionisée provenant d'une capacité tampon, et c) la récupération de la solution formée à l'étape b), dans la capacité tampon, et d) optionnellement la recirculation de la solution contenue dans la capacité tampon dans le système d'absorption jusqu'à obtenir une solution ayant la concentration voulue en produit chimique, la solution contenue dans la capacité tampon remplaçant alors l'eau désionisée.

L'invention trouve application dans le domaine de la fabrication de solutions ultra pures.

## Description

L'invention concerne un procédé et un système pour la production de solutions ultra pures d'un produit chimique.

Dans de nombreux domaines de l'industrie, on utilise des solutions ultra pures d'un produit chimique pour le nettoyage de produits en cours ou en fin de procédé de fabrication.

Par exemple, dans l'industrie des semi-conducteurs, il est nécessaire d'ôter les traces de métal qui sont déposées sur les tranches de silicium, après certaines phases du procédé de fabrication de ces tranches de silicium.

Ces étapes de nettoyage utilisent des produits chimiques en solution plus ou moins diluée mais toujours de grande pureté.

Dans de ce but, on peut utiliser des solutions ultra pures du produit chimique déjà préparées et conditionnées mais, ces solutions peuvent se modifier ou se polluer lors de leur stockage ou transport.

Il a alors été proposé de fabriquer directement sur le site d'utilisation de telles solutions en faisant réagir un gaz du produit chimique concerné avec de l'eau désionisée.

A cet effet, il a déjà été proposé d'utiliser un applicateur de gaz réagissant avec de l'eau désionisée, directement sur le site d'utilisation, sans utiliser de système de purification.

Cependant, ce système présente l'inconvénient majeur de produire des solutions de pureté insuffisante ou alors de nécessiter l'utilisation de gaz ultra pur, ce qui génère des coûts de fonctionnement prohibitifs.

Il a également été proposé d'utiliser un système comprenant un purificateur ionique. Bien que ce système amène une pureté satisfaisante, il ne convient que pour les consommations importantes car il est complexe et nécessite un investissement initial important.

La présente invention a pour but de pallier les inconvénients des procédés et systèmes de l'art antérieur en proposant un procédé et un système de production de solutions ultra pures d'un produit chimique à partir de ce produit chimique sous forme de gaz comprimé et liquéfié, qui permettent la production de ces solutions ultra pures directement sur le site d'utilisation, sans utiliser de purificateur ionique et sans nécessiter l'utilisation de gaz ultra pur.

Ces buts sont atteints par l'invention qui propose un procédé de production d'une solution ultra pure d'un produit chimique à partir du produit chimique sous forme de gaz liquéfié comprimé, caractérisé en ce qu'on utilise un gaz de qualité industrielle et en ce qu'il comprend l'introduction du produit chimique dans un dispositif de distillation où il est fractionné en une fraction lourde contaminée en une fraction gazeuse purifiée, l'introduction de la fraction gazeuse purifiée dans un dispositif d'absorption où elle est mise en contact avec de l'eau désionisée provenant d'une capacité tampon, la récupération de la solution ainsi formée dans la capacité tampon, et optionnellement la recirculation de la solution contenue dans la capacité tampon dans le système d'absorption jusqu'à obtenir une solution ayant la concentration voulue en produit chimique, la solution contenue dans la capacité tampon remplaçant alors l'eau désionisée.

Selon une première caractéristique du procédé de l'invention, la solution contenue dans la capacité tampon est refroidie ou réchauffée dans un échangeur de chaleur avant sa recirculation dans la colonne d'absorption.

Selon une autre caractéristique du procédé de l'invention, on contrôle en permanence la concentration en produit chimique de la solution contenue dans la capacité tampon et on régule l'introduction du produit chimique dans la colonne de distillation ainsi que l'introduction d'eau désionisée dans la capacité tampon, en fonction de la concentration voulue en produit chimique.

Selon encore une autre caractéristique de l'invention on contrôle en permanence le niveau de la solution dans la capacité tampon et on régule l'introduction de produit chimique dans la colonne de distillation et l'introduction d'eau désionisée dans la capacité tampon, en fonction de ce niveau.

Selon toujours une autre caractéristique du procédé de l'invention, le produit chimique est introduit dans l'appareil de distillation sous forme liquide et/ou gazeuse.

Selon encore une autre caractéristique du procédé de l'invention, le produit chimique est sélectionné parmi NH₃, HCI et HF.

L'invention propose également un système pour la production d'une solution ultra pure d'un produit chimique à partir du produit chimique sous forme de gaz liquéfié comprimé, caractérisé en ce qu'il comprend un récipient de stockage apte à contenir le produit chimique sous forme de gaz liquéfié comprimé de qualité industrielle, un moyen de décompression du gaz contenu dans le récipient de stockage, une ligne de transport du produit chimique contenu dans le récipient de stockage munie d'une vanne d'arrêt et/ou de réglage de débit de soutirage du produit chimique, amenant le produit chimique jusqu'à un dispositif de distillation du produit chimique, une ligne de transport de la fraction gazeuse purifiée sortant du dispositif de distillation, munie d'une vanne d'arrêt et/ou de réglage de la quantité de fraction gazeuse purifiée transportée, permettant le transport de la fraction gazeuse purifiée vers un dispositif de dissolution de la phase gazeuse dans de l'eau désionisée, jusqu'à obtention de la solution de concentration voulue en produit chimique.

Selon une première caractéristique du système de l'invention, le dispositif de distillation comprend un bouilleur relié en communication de fluide avec la ligne du transport du produit chimique contenu dans le récipient de stockage jusqu'au dispositif de distillation, ce dispositif de distillation comprenant une colonne de distillation disposée en communication de fluide avec et au-dessus du bouilleur et un condenseur disposé au-dessus de la colonne de distillation, le condenseur étant relié à une alimentation en eau réfrigérée par un conduit.

Selon une autre caractéristique du système de l'invention, le conduit alimentant le condenseur en eau réfrigérée est muni d'une vanne d'arrêt et/ou de réglage du débit d'eau réfrigérée.

Selon toujours une caractéristique du système de l'invention, la colonne de distillation est une colonne à garnissage.

Selon toujours une autre caractéristique du système de l'invention, le dispositif de dissolution comprend une colonne d'absorption, placée en communication de fluide au-dessus d'une capacité tampon, recevant de l'eau désionisée par un conduit d'alimentation muni d'une vanne d'arrêt et/ou de réglage du débit d'eau, une pompe permettant le transport de la solution contenue dans la capacité tampon, via un conduit muni d'une vanne d'arrêt et/ou de réglage du débit de solution transportée, vers le sommet de la colonne d'absorption.

Selon une caractéristique supplémentaire du système de l'invention, le dispositif de dissolution comprend de plus un échangeur de chaleur placé sur le conduit de transport de la solution contenue dans la capacité tampon.

Le dispositif de dissolution peut de plus comprendre un dispositif relié à la capacité de tampon pour soutirer la solution contenue dans cette capacité tampon.

Le système de l'invention peut de plus comprendre un dispositif de contrôle de la concentration en produit chimique de la solution contenue dans la capacité tampon, relié en communication de fluide à la capacité tampon par un conduit et permettant le contrôle de l'ouverture et de la fermeture des vannes d'introduction de produit chimique et d'arrivée d'eau désionisée.

Il peut encore comprendre un dispositif de contrôle du niveau haut et bas de la solution contenue dans la capacité tampon permettant le contrôle de l'ouverture et la fermeture des vannes d'introduction de produit chimique et d'arrivée d'eau désionisée.

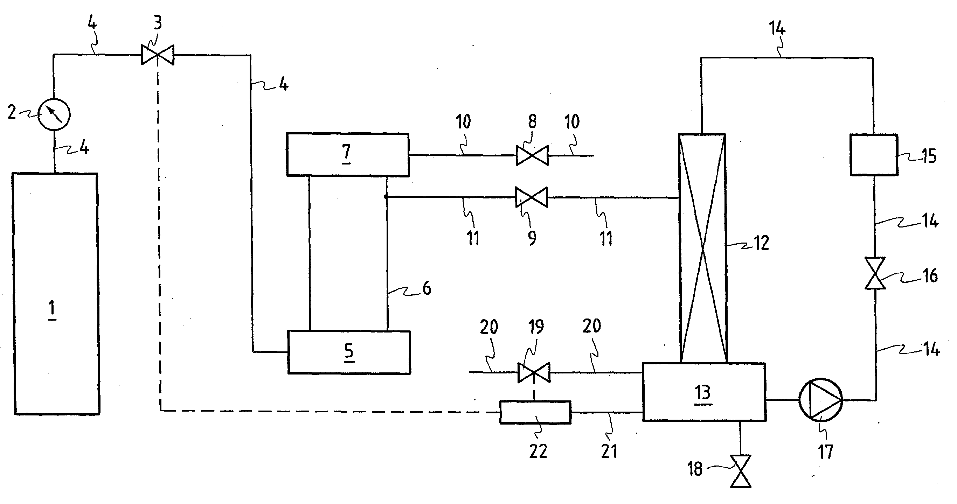

L'invention sera mieux comprise et d'autres buts, caractéristiques, détails, et avantages de celle-ci apparaîtront plus clairement au cours de la description explicative qui va suivre qui est faite en référence au dessin unique annexé qui représente schématiquement un mode de réalisation du système de l'invention.

Le procédé de production d'une solution ultra pure de l'invention permet de produire une solution ultra pure à partir du produit chimique sous forme de gaz liquéfié comprimé, ce gaz étant de qualité industrielle et non pas de grande pureté comme dans l'art antérieur.

De plus, le procédé de l'invention peut être mis en oeuvre dans un système simple et de faible investissement.

Le procédé de production d'une solution ultra pure de l'invention est un procédé très souple à mettre en oeuvre. II peut être utilisé en continu ou en discontinu et la concentration finale en produit chimique de la solution ultra pure à obtenir peut être changée quasi-instantanément, selon les besoins immédiats de l'utilisateur de la solution ultra pure.

Le procédé de production d'une solution ultra pure de l'invention sera maintenant décrit en référence à la figure annexée.

Le procédé de l'invention consiste à soutirer le produit chimique stocké dans le récipient de stockage 1 que ce soit sous forme liquide ou gazeuse ou sous la forme d'un mélange de liquide et de gaz, à introduire le produit chimique soutiré dans un dispositif de distillation 5, 6, 7 où il est fractionné en une fraction lourde contaminée et en une fraction gazeuse purifiée, puis à introduire la fraction gazeuse purifiée dans un système d'absorption 12 où elle est mise en contact avec de l'eau désionisée provenant d'une capacité tampon 13.

La solution formée ayant la concentration voulue est ensuite récupérée dans la capacité tampon 13.

Optionnellement, le procédé de l'invention comprend la recirculation de la solution contenue dans la capacité tampon 13 dans la colonne d'absorption 12 jusqu'à obtenir une solution ayant la concentration voulue en production chimique. Dans ce cas, la solution contenue dans la capacité tampon 13 remplace l'eau désionisée.

De préférence, la solution contenue dans la capacité tampon 13 est refroidie dans un échangeur thermique 15, avant sa recirculation dans la colonne d'absorption 12.

De préférence, l'introduction du produit chimique dans le dispositif de distillation 5, 6, 7, ainsi que l'introduction d'eau désionisée dans la capacité tampon 13, seront contrôlées en permanence et seront régulées automatiquement en fonction de la concentration en produit chimique voulue pour la solution ultra pure à obtenir.

Alternativement ou en addition, l'introduction du produit chimique dans la colonne de distillation 6 et l'introduction d'eau désionisée dans la capacité tampon 13 pourront être régulées en fonction du niveau de la solution contenue dans la capacité tampon 13.

Par exemple, la capacité tampon 13 peut être équipée d'une sonde de niveaux haut et bas et les vannes d'ajout d'eau désionisée 19 et la vanne 9 d'ajout du produit chimique dans la colonne de distillation seront asservies en fonction de ces niveaux haut et bas.

Le système pour la production d'une solution ultra pure d'un produit chimique à partir du produit chimique sous forme de gaz liquéfié comprimé de l'invention sera maintenant décrit également en référence à la figure.

Comme on le voit sur la figure, le système de l'invention comprend un récipient de stockage 1 apte à contenir le produit chimique sous forme de gaz liquéfié comprimé de qualité industrielle, un moyen de décompression 2 du gaz contenu dans le récipient de stockage 1 pour réguler la pression et donc le débit de soutirage du produit chimique contenu dans le récipient de stockage 1, ce produit chimique étant soutiré sous forme de liquide ou de gaz ou d'un mélange des deux, une ligne 4 de transport du produit chimique contenu dans le récipient de stockage 1 pour amener le produit chimique jusqu'à un dispositif 5, 6, 7 de distillation du produit chimique. La ligne de distribution 4 est munie d'une vanne 3 d'arrêt de soutirage du produit chimique et/ou de réglage de ce débit de soutirage.

Le produit chimique est transformé en une phase lourde contenant les impuretés et une phase gazeuse purifiée dans le dispositif de distillation 5, 6, 7.

Une ligne 11 reliée en tête de la colonne de distillation 6 du dispositif de distillation 5, 6, 7 permet le transport de la fraction gazeuse purifiée sortant de cette colonne de distillation 6 vers un dispositif 12, 13, 14, 16, 17, 19, 20 de dissolution de cette phase gazeuse dans de l'eau désionisée.

De préférence, le dispositif de distillation 5, 6, 7 comprend un bouilleur 5 relié à la ligne de transport 4 et reçoit le produit chimique soutiré du récipient de stockage 1. Au-dessus du bouilleur 5 se trouve la colonne de distillation 6 à proprement parler où le produit chimique est transformé en les phases lourde et gazeuse légère purifiée déjà citées. Cette colonne 6 peut être une colonne de garnissage ou sans garnissage selon l'efficacité de distillation désirée. Elle peut également être une colonne à plateaux. Un condenseur 7 disposé en tête de la colonne 6 permet la recondensation de la phase lourde. Le condenseur 7 est alimenté en eau réfrigérée par la canalisation 10 qui est éventuellement munie d'une vanne 8 d'arrêt et/ou de réglage du débit d'eau réfrigérée.

Quant au dispositif de dissolution 12, 13, 14, 16, 17, 19, 20 il comprend une colonne d'absorption 12 en tête de laquelle la phase gazeuse purifiée, provenant de la colonne de distillation 6, arrive.

La phase gazeuse purifiée est transportée de la colonne de distillation 6 vers la colonne d'absorption 12 par une ligne de transport 11 munie d'une vanne d'arrêt et/ou de réglage 9.

La colonne d'absorption 12 est placée au-dessus d'une capacité tampon 13 qui est alimentée en eau désionisée par la ligne d'arrivée d'eau désionisée 20, éventuellement munie d'une vanne d'arrêt et/ou de réglage du débit 19.

Dans le système de l'invention, en fonctionnement, la fraction gazeuse purifiée arrive par la ligne de transport 11, traverse la colonne d'absorption 12 pendant que l'eau désionisée contenue dans le récipient capacité tampon 13 est également envoyée, via la ligne 14 munie d'une pompe 17, au sommet de la colonne d'absorption 12 dans laquelle elle rencontre la phase gazeuse purifiée et où se produit la dissolution du produit chimique dans l'eau désionisée.

La solution du produit chimique retombe dans la capacité tampon 13 et est éventuellement remise en circulation dans la colonne d'absorption 12, via la ligne 14 et la pompe 17. Cette recirculation est répétée jusqu'à obtenir la solution ayant la concentration voulue en produit chimique dans la capacité tampon 13.

La ligne 14 peut être munie d'une vanne d'arrêt et/ou de réglage du débit de recirculation de la solution contenue dans la capacité tampon 13 et éventuellement d'un échangeur thermique 15, pour refroidir la solution contenue dans la capacité tampon 13, ou la réchauffer, avant son introduction dans la colonne d'absorption 12.

La capacité tampon 13 est munie d'un dispositif 18 de soutirage de la solution du produit chimique pour l'amener au point d'utilisation de la solution ultra pure.

Ce dispositif de soutirage 18 peut être, comme représenté dans la figure, un conduit muni d' une vanne d'arrêt et/ou de réglage.

De préférence, le système de l'invention comprend un dispositif 22 permettant le contrôle en permanence de la concentration de la solution contenue dans la capacité tampon 13. Ce dispositif 22 est relié à la capacité tampon 13 par un conduit 21.

Avantageusement, le dispositif de contrôle de la concentration de la solution contenue dans la capacité tampon 13 asservit la vanne 3 d'introduction de produit chimique dans le dispositif de distillation 5, 6, 7 et/ou la vanne 9 d'introduction de la fraction gazeuse purifiée dans la colonne de d'absorption 12, ainsi que la vanne 19 d'introduction d'eau désionisée dans la capacité tampon 13. Cela permet de réguler automatiquement l'introduction d'eau désionisée et de produit chimique dans la colonne d'absorption 12 en fonction de la concentration de la solution à obtenir voulue.

Le système de l'invention peut encore comprendre un dispositif du contrôle des niveaux haut et/ou bas de la solution contenue dans la capacité tampon 13 et de réguler les débits d'introduction d'eau désionisée et de produit chimique dans la colonne d'absorption 12 et la capacité tampon 13, en fonction de ces niveaux haut et bas.

L'introduction du produit chimique pourra être contrôlée par action soit sur la vanne d'introduction de produit chimique dans le dispositif de distillation 5, 6, 7, soit sur la vanne 9 d'introduction de la phase gazeuse purifiée dans la colonne d'absorption 12.

Afin de mieux faire comprendre l'invention, on va maintenant en décrire, à titre d'exemple purement illustratif et non limitatif, un mode de mise en oeuvre.

Le système de l'invention se compose du bouilleur 5, de la colonne de distillation 6 garnie ou non, du condenseur 7, du récipient tampon 13, de la colonne de dissolution 12, de préférence à garnissage, d'une pompe de recirculation 17 et de l'échangeur de chaleur 15.

Le bouilleur 5 reçoit, via la vanne 3 et la ligne de transport 4, le gaz anhydre liquéfié ou non.

Le bouilleur 5 est équipé d'une sonde de niveaux haut et bas et d'une sonde de température régulant la chauffe du bouilleur 5. La colonne à distiller 6 surmontant le bouilleur 5 peut être garnie ou non suivant l'efficacité souhaitée. Au sommet de la colonne à distiller 6 est placé un condenseur 7 qui assure un minimum de reflux sur la colonne 6.

Le reflux est ajustable par la vanne 8 de débit d'eau réfrigérée placée sur la ligne d'alimentation en eau réfrigérée 10.

Le gaz à dissoudre dans la colonne d'absorption garnie 12 est prélevé au sommet de la colonne à distiller 6, via la ligne 11 munie de la vanne 9. La capacité tampon 13 sur laquelle est montée la colonne d'absorption 12 a une capacité suffisante et adaptée au bac de nettoyage alimenté. L'alimentation du bac de nettoyage se fait via le conduit et la vanne 18 placés en sortie de la capacité tampon 13.

La capacité tampon 13 est équipée d'une sonde de niveaux haut et bas asservissant la vanne d'ajout d'eau désionisée 19 placée sur la ligne 20 d'alimentation en eau désionisée arrivant dans la capacité tampon 13.

Une sonde 22 de mesure de la concentration en produit chimique de la solution contenue dans la capacité tampon 13 asservit la vanne 3 d'alimentation en produit chimique et la vanne 19 d'ajout fin d'eau désionisée.

La mesure de la concentration de la solution chimique se fait soit par mesure de la densité de cette solution soit par une sonde de conductivité sans électrode. Cependant, elle peut bien entendu se faire de toute manière connue de l'homme de métier comme par mesure de la vitesse du son dans la solution chimique ou encore par titration.

Une pompe 17 assure la recirculation de la solution chimique contenue dans la capacité tampon 13 dans la colonne d'absorption 12.

Le débit de recirculation est réglé par la vanne 16 placée sur la ligne de recirculation 14.

Un capteur de température (non représenté) donne la température de la boucle après l'échangeur de chaleur 15 et un détecteur de circulation FS coupe l'arrivée de gaz sur la colonne d'absorption en cas d'absence de débit.

Ce système peut fonctionner en continu ou en discontinu, le prélèvement de la solution ayant la concentration en produit chimique souhaitée s'effectuant par la vanne 18.

Dans le cas d'un fonctionnement en discontinu le régulateur de concentration 22 agit sur la vanne 3 d'apport en gaz ou sur la vanne 19 d'apport en eau désionisée selon que la concentration mesurée est en excès ou en défaut.

Dans le cas d'un fonctionnement en continu la vanne 19 d'apport en eau désionisée et la vanne 18 de soutirage de la solution chimique sont asservies au régulateur de concentration 22.

Alternativement ou en addition, la vanne 3 d'apport en produit chimique et la vanne 18 de soutirage de la solution de la capacité tampon 13 sont asservies à un régulateur de niveau, la vanne 3 d'apport de produit chimique étant elle asservie au contrôleur de concentration 22.

On peut également utiliser un gaz anhydre et le condenser, à l'aide du condenseur 7, jusqu'à ce que le bouilleur 5 soit plein. Dans ce cas, lorsque le bouilleur 5 est plein, la distillation flash peut débuter.

Le système de l'invention peut être embarqué sur l'outil de nettoyage ou situé à proximité et alimenter un ou plusieurs outils de nettoyage.

Le système et le procédé de l'invention sont particulièrement efficaces pour produire de solutions d'acide fluorhydrique diluées entre 0,1% et 5% en poids, des solutions d'acide chlorhydrique diluées entre 0,01 et 35% en poids et des solutions d'ammoniaque diluées entre 2 et 60% en poids.

Le procédé et le système de l'invention trouvent plus particulièrement utilisation pour la fabrication des solutions ultra pures pour le nettoyage de tranches de silicium destinées l'industrie des semi-conducteurs.

## Revendications

1. Procédé de production d'une solution ultra pure d'un produit chimique à partir du produit chimique sous forme de gaz liquéfié comprimé, **caractérisé en ce qu'**on utilise un gaz de qualité industrielle et **en ce qu'**il comprend :
a) l'introduction du produit chimique dans un dispositif de distillation (5, 6, 7) où il est fractionné en une fraction lourde contaminée et en une fraction gazeuse purifiée,
b) l'introduction de la fraction gazeuse purifiée dans un dispositif d'absorption (12) où elle est mise en contact avec de l'eau désionisée provenant d'une capacité tampon (13), et
c) la récupération de la solution formée à l'étape b), dans la capacité tampon (13), et
d) optionnellement la recirculation de la solution contenue dans la capacité tampon (13) dans le système d'absorption (12) jusqu'à obtenir une solution ayant la concentration voulue en produit chimique, la solution contenue dans la capacité tampon (13) remplaçant alors l'eau désionisée.

2. Procédé selon la revendication 1, **caractérisé en ce que** la solution contenue dans la capacité tampon (13) est refroidie ou réchauffée dans un échangeur de chaleur (15) avant sa recirculation dans la colonne d'absorption (12).

3. Procédé selon la revendication 1 ou 2, **caractérisé en ce qu'**on contrôle en permanence la concentration en produit chimique de la solution contenue dans la capacité tampon (13) et **en ce qu'**on régule l'introduction du produit chimique dans la colonne de distillation (12) ainsi que l'introduction d'eau désionisée dans la capacité tampon (13), en fonction de la concentration voulue en produit chimique.

4. Procédé selon l'une quelconque des revendications précédentes, **caractérisé en ce qu'**on contrôle en permanence le niveau de la solution dans la capacité tampon (13) et **en ce qu'**on régule l'introduction de produit chimique dans la colonne de distillation (12) et l'introduction d'eau désionisée dans la capacité tampon (13) en fonction de ce niveau.

5. Procédé selon l'une quelconque des revendications précédentes, **caractérisé en ce que** le produit chimique est introduit dans l'appareil de distillation (5, 6, 7) sous forme liquide et/ou gazeuse.

6. Procédé selon l'une quelconque des revendications précédentes, **caractérisé en ce que** le produit chimique est sélectionné parmi NH₃, HCI et HF.

7. Système pour la production d'une solution ultra pure d'un produit chimique à partir du produit chimique sous forme de gaz liquéfié comprimé, **caractérisé en ce qu'**il comprend :
- un récipient de stockage (1) apte à contenir les produits chimiques sous forme de gaz liquéfié comprimé de qualité industrielle,
- un moyen de décompression (2) du gaz contenu dans le récipient de stockage (1),
- une ligne (4) de transport du produit chimique contenu dans le récipient de stockage (1), munie d'une vanne (3) d'arrêt et/ou de réglage du débit de soutirage du produit chimique amenant le produit chimique jusqu'à un dispositif (5, 6, 7) de distillation du produit chimique,
- une ligne (11) de transport de la fraction gazeuse purifiée sortant du dispositif (5, 6, 7) de distillation, munie d'une vanne (9) d'arrêt et/ou de réglage de la quantité de fraction gazeuse purifiée transportée, permettant le transport de la fraction gazeuse purifiée vers un dispositif (12, 13, 14, 16, 17, 19, 20) de dissolution de la phase gazeuse dans de l'eau désionisée, jusqu'à obtention de la solution de concentration voulue en produit chimique.

8. Système selon la revendication 7, **caractérisé en ce que** le dispositif de distillation (5, 6, 7) comprend un bouilleur (5) relié en communication de fluide à la ligne du transport (4), une colonne de distillation (6) disposée en communication de fluide au-dessus du bouilleur (5) et un condenseur (7) disposé au-dessus de la colonne de distillation (6), le condenseur (7) étant relié à une alimentation en eau réfrigérée par un conduit (10).

9. Système selon la revendication 8, **caractérisé en ce que** le conduit (10) est muni d'une vanne (8) d'arrêt et/ou de réglage du débit d'eau réfrigérée.

10. Système selon la revendication 8 ou 9, **caractérisé en ce que** la colonne de distillation (6) est une colonne à garnissage ou à plateaux.

11. Système selon l'une quelconque des revendications 7 à 10, **caractérisé en ce que** le dispositif de dissolution (12, 13, 14, 16, 17, 19, 20) comprend une colonne d'absorption (12), placée en communication de fluide au-dessus d'une capacité (13), qui reçoit de l'eau désionisée par le conduit d'alimentation (20) muni d'une vanne (19) d'arrêt et/ou de réglage du débit d'eau, une pompe (17) permettant le transport du contenu de la capacité (13), via le conduit (14) muni d'une vanne (16) d'arrêt et/ou de réglage du débit de solution transportée, vers le sommet de la colonne d'absorption (12).

12. Système selon la revendication 11, **caractérisé en ce que** le dispositif de dissolution (12, 13, 14, 16, 17, 19, 20) comprend de plus un échangeur de chaleur (15) placé sur la ligne de transport (14).

13. Système selon la revendication 11 ou 12, **caractérisé en ce que** le dispositif de dissolution (12, 13, 14, 16, 17, 19, 20) comprend de plus un dispositif (18) relié à la capacité de tampon (13) pour soutirer la solution contenue dans cette capacité tampon (13).

14. Système selon l'une quelconque des revendications 11 à 13, **caractérisé en ce qu'**il comprend de plus un dispositif (22) du contrôle de la concentration en produit chimique de la solution contenue dans la capacité tampon (13) relié en communication de fluide à la capacité tampon (13) par un conduit (21) et permettant le contrôle de l'ouverture et de la fermeture des vannes d'introduction de produit chimique (3) et/ou (11) et d'arrivée d'eau désionisée (19).

15. Système selon l'une quelconque des revendications 8 à 14, **caractérisé en ce qu'**il comprend de plus un dispositif de contrôle du niveau haut et bas de la solution contenue dans la capacité tampon (13) permettant le contrôle de l'ouverture et la fermeture des vannes (3) et/ou (11) d'introduction de produit chimique et d'arrivée d'eau désionisée (19).
